(19) Europäisches Patentamt / European Patent Office / Office européen des brevets

(11) **EP 4 629 320 A1**

(12) **EUROPEAN PATENT APPLICATION**
published in accordance with Art. 153(4) EPC

(43) Date of publication:
08.10.2025 Bulletin 2025/41

(21) Application number: 23897434.9

(22) Date of filing: 09.11.2023

(51) International Patent Classification (IPC):
$H01M\ 4/134^{(2010.01)}$    $H01M\ 4/40^{(2006.01)}$
$H01M\ 4/66^{(2006.01)}$    $H01M\ 10/052^{(2010.01)}$

(52) Cooperative Patent Classification (CPC):
H01M 4/134; H01M 4/40; H01M 4/66;
H01M 10/052; Y02E 60/10

(86) International application number:
PCT/JP2023/040416

(87) International publication number:
WO 2024/116782 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.11.2022 JP 2022190477

(71) Applicant: **Panasonic Intellectual Property
Management Co., Ltd.**
**Kadoma-shi, Osaka 571-0057 (JP)**

(72) Inventors:
• **TERADA, Shoshi**
Kadoma-shi, Osaka 571-0057 (JP)
• **KANO, Akira**
Kadoma-shi, Osaka 571-0057 (JP)

(74) Representative: **Novagraaf International SA**
Chemin de l'Echo 3
1213 Onex, Geneva (CH)

(54) **LITHIUM SECONDARY BATTERY**

(57) A lithium secondary battery (10) disclosed includes a positive electrode (11), a negative electrode (12), a separator (13), and a nonaqueous electrolyte. The negative electrode (12) is a negative electrode in which a metal layer containing lithium is deposited during charging, and the metal layer dissolves during discharging. The negative electrode (12) includes a current collector containing copper. The negative electrode (12) contains at least one metal element M selected from the group consisting of metal elements having a melting point of 50°C or lower as a simple substance and a metal element having the lowest melting point among metal elements that constitute an alloy having a melting point of 50°C or lower. The negative electrode (12) contains the metal element M at an area density in a range of 0.001 $mg/cm^2$ to 0.75 $mg/cm^2$ in a region where the metal layer is deposited during charging.

*FIG. 1*

## Description

[Technical Field]

The present disclosure relates to a lithium secondary battery.

[Background Art]

Lithium secondary batteries (also referred to as lithium metal secondary batteries), in which lithium metal is used as a negative electrode active material, have high theoretical capacity densities. In a lithium secondary battery, lithium is deposited on a negative electrode current collector during a charging process, and the deposited lithium dissolves in a nonaqueous electrolyte during a discharging process. In a lithium secondary battery, a negative electrode containing a lithium alloy is used in some cases. Conventionally, various proposals have been made regarding a negative electrode of a lithium secondary battery.

Claim 1 of PTL 1 (Japanese Laid-Open Patent Publication No. 2015-512129) describes a "method for coating a substrate for a lithium secondary battery using inorganic particles, the method comprising: a charging step of charging inorganic particles to form charged inorganic particles; a transferring step of transferring the charged inorganic particles to a substrate for a lithium secondary battery to form a coating layer; and a fixing step of fixing the coating layer by heat and pressure.

Claim 1 of PTL 2 (Japanese Laid-Open Patent Publication No. 2007-214127) discloses a "negative electrode active material for a lithium secondary battery, comprising a metal that is liquid at room temperature; and Sn".

Claim 1 of PTL 3 (Japanese Laid-Open Patent Publication No. 2015-520926) discloses a "negative electrode comprising: a metal layer containing lithium; and a plate-shaped carbon material layer disposed on the metal layer and containing a carbon material having a flat plate structure".

[Citation List]

[Patent Literature]

PTL 1: Japanese Laid-Open Patent Publication No. 2015-512129
PTL 2: Japanese Laid-Open Patent Publication No. 2007-214127
PTL 3: Japanese Laid-Open Patent Publication No. 2015-520926

[Summary of Invention]

[Technical Problem]

There is demand for lithium secondary batteries having improved cycle characteristics. An object of the present disclosure is to provide a lithium secondary battery having a favorable cycle characteristic.

[Solution to Problem]

One aspect of the present disclosure relates to a lithium secondary battery. The lithium secondary battery includes: a positive electrode; a negative electrode; a separator disposed between the positive electrode and the negative electrode; and a nonaqueous electrolyte, wherein the negative electrode is a negative electrode in which a metal layer containing lithium is deposited during charging, and the metal layer dissolves during discharging, the negative electrode includes a current collector containing copper, the negative electrode contains at least one metal element M selected from the group consisting of metal elements having a melting point of 50°C or lower as a simple substance and a metal element having the lowest melting point among metal elements that constitute an alloy having a melting point of 50°C or lower, and the negative electrode contains the metal element M at an area density in a range of 0.001 mg/cm$^2$ to 0.75 mg/cm$^2$ in a region where the metal layer is deposited during charging.

[Advantageous Effects of Invention]

According to the present disclosure, it is possible to obtain a lithium secondary battery having a favorable cycle characteristic.

While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

[FIG. 1] FIG. 1 depicts a cross-sectional view schematically showing a lithium secondary battery of Embodiment 1.
[FIG. 2A] FIG. 2A depicts an example of an image of a negative electrode of a battery obtained through SEM-EDX in Examples.
[FIG. 2B] FIG. 2B depicts another example of an image of a negative electrode of a battery obtained through SEM-EDX in Examples.
[FIG. 2C] FIG. 2C depicts another example of an image of a negative electrode of a battery obtained through SEM-EDX in Examples.
[FIG. 2D] FIG. 2D depicts another example of an image of a negative electrode of a battery obtained through SEM-EDX in Examples.

[Description of Embodiments]

Although embodiments according to the present disclosure will be described below using examples, the present disclosure is not limited to the examples described below. Although specific numerical values and materials may be mentioned as examples in the following description, other numerical values and other materials may be applied as long as effects of the present disclosure can be obtained. The term "range of numerical value A to numerical value B" used in this specification includes the numerical value A and the numerical value B, and can be read as "range of numerical value A or more to numerical value B or less". In the following description, when lower limits and upper limits of numerical values regarding specific physical properties, conditions, or the like are given as examples, any of the above-mentioned lower limits and any of the above-mentioned upper limits can be combined as desired, as long as the lower limit is not greater than or equal to the upper limit. In the following description, when examples of constituent elements or methods are listed, unless otherwise specified, only one of the listed examples may be used, or two or more of the listed examples may be used in combination.

(Lithium Secondary Battery)

Hereinafter, the lithium secondary battery according to this embodiment may be referred to as "lithium secondary battery (B)". The lithium secondary battery (B) includes a positive electrode, a negative electrode, a separator disposed between the positive electrode and the negative electrode, and a nonaqueous electrolyte. The negative electrode is a negative electrode in which a metal layer containing lithium is deposited during charging, and the metal layer dissolves during discharging. The negative electrode includes a current collector (negative electrode current collector) containing copper. The negative electrode contains at least one metal element M selected from the group consisting of metal elements having a melting point of 50°C or lower as a simple substance (pure metal) and a metal element having the lowest melting point among metal elements that constitute an alloy having a melting point of 50°C or lower. The negative electrode contains the metal element M at an area density in a range of 0.001 mg/cm$^2$ to 0.75 mg/cm$^2$ in a region where the metal layer is deposited during charging. The area density of the metal element M in the region of the negative electrode where the metal layer is deposited may be referred to as an "area density Dm" hereinafter. The area density Dm means the mass of the metal element M present per unit area.

In a typical lithium secondary battery, the lithium metal is deposited on a negative electrode during charging, and the deposited lithium metal dissolves during discharging. In general, in lithium secondary batteries, a film is formed on the negative electrode due to decomposition and/or reaction of components contained in the electrolyte. The film is called a SEI (Solid Electrolyte Interphase) film. The SEI film is also formed on the surface of deposited lithium metal. During charging, on the negative electrode, lithium metal is deposited and a SEI film is formed. Therefore, compared with lithium ion secondary batteries, a charging reaction of lithium secondary batteries is more likely to be ununiform, which may result in a decrease in capacity and deterioration in cycle characteristics.

On the other hand, in the lithium secondary battery (B) according to this embodiment, the negative electrode has the above configuration. As a result of studies, the inventors of the present application have found that by using the negative electrode having the above configuration, it is possible to improve cycle characteristics. The present disclosure is based on this new finding.

Since the negative electrode of the lithium secondary battery (B) according to this embodiment contains a predetermined amount of the metal element M, which has a higher standard electrode potential than lithium, the reductive decomposition reaction of the electrolyte solution can be suppressed, and as a result, the growth of the SEI film can be suppressed. In addition, the metal element M and an alloy containing the metal element M have low melting points, and thus can be easily applied to a surface of the negative electrode current collector.

The negative electrode contains the metal element M at an area density Dm in a range of 0.001 mg/cm$^2$ to 0.75 mg/cm$^2$. The unit area of the area density Dm is the area in one surface of the negative electrode. When the metal layers are deposited on both surfaces of the negative electrode, the negative electrode contains the metal element M on each surface at an area density Dm in a range of 0.001 mg/cm$^2$ to 0.75 mg/cm$^2$. That is, when the metal layers are deposited on both surfaces of the negative electrode, the total amount of the metal element M on both surfaces is in a range of 0.002 mg to 1.50 mg per square centimeter (cm$^2$) of the negative electrode. Note that, of the two main surfaces of the negative electrode, the metal layer is deposited on the main surface facing a positive electrode mixture layer with the separator interposed therebetween.

The area density Dm is 0.001 mg/cm$^2$ or more, and may be 0.010 mg/cm$^2$ or more, 0.025 mg/cm$^2$ or more, 0.05 mg/cm$^2$ or more, 0.1 mg/cm$^2$ or more, or 0.3 mg/cm$^2$ or more. The area density Dm is 0.75 mg/cm$^2$ or less, and may be 0.5 mg/cm$^2$ or less, 0.4 mg/cm$^2$ or less, or 0.2 mg/cm$^2$ or less. The area density Dm may be in a range of 0.025 mg/cm$^2$ to 0.5 mg/cm$^2$ (e.g., a range of 0.05 mg/cm$^2$ to 0.5 mg/cm$^2$).

When the state of charge is in a range of 90% to 100%, the area density Dm may be in the above range. For example, when the state of charge is 95% or 100%, the area density Dm may be in the above range. In this specification, a state of charge (SOC) of 90% refers to a state in which the battery is charged with an electrical quantity that is 90% of the rated capacity of the battery. When the SOC is 100%, it means that the battery is fully charged.

The negative electrode may contain a metal disposed on a surface of the negative electrode current collector and having a melting point of 50°C or lower. The metal having a melting point of 50°C or lower may be a pure metal or an alloy. The metal having a melting point of 50°C or lower may include gallium.

The metal element M is, for example, gallium. The negative electrode of the lithium secondary battery (B) may contain gallium disposed on the surface of the negative electrode current collector. For example, at least one selected from the group consisting of gallium metal (pure metal) and an alloy containing gallium may be present on the surface of the negative electrode current collector. The alloy may contain at least one element selected from the group consisting of copper, indium, and tin.

Gallium metal and/or an alloy containing gallium and copper (alloy (A)) may be present on the surface of the negative electrode current collector. Gallium present on the surface of the negative electrode current collector diffuses into the metal layer deposited thereon, and suppresses the formation of a SEI film. In particular, the presence of a gallium-copper alloy, which can be alloyed with lithium, on a copper foil of the negative electrode current collector, which is not alloyed with lithium, makes it possible to reduce resistance due to improvement in adhesion between lithium and the negative electrode current collector and to make lithium deposition more uniform.

The above alloy (A) may be a gallium-copper alloy. The alloy (A) may contain at least one selected from the group consisting of indium (In) and tin (Sn). When the alloy (A) contains indium and/or tin, the melting point is lowered, and thus the alloy (A) can be applied more uniformly and thinly onto an electrode at around room temperature. Furthermore, indium and tin also suppress the formation of the SEI film due to indium and tin being alloyed with lithium metal.

An area density Dind of indium contained per unit area of a region of the negative electrode where the metal layer is deposited may be 0.0001 mg/cm$^2$ or more, or 0.01 mg/cm$^2$ or more, and 0.1 mg/cm$^2$ or less, or 0.05 mg/cm$^2$ or less. An area density Dtin of tin contained per unit area of a region of the negative electrode of a battery with a SOC of 90%, where the metal layer is deposited, may be 0.0001 mg/cm$^2$ or more, or 0.001 mg/cm$^2$ or more, and 0.1 mg/cm$^2$ or less, or 0.05 mg/cm$^2$ or less. The area densities Dind and Dtin may be smaller than the area density Dm.

The metal layer may contain the metal element M (e.g., gallium). For example, the metal layer may contain a gallium-lithium alloy. The presence of gallium-lithium alloy layers around deposited lithium metal lumps makes it possible to suppress a reaction between the electrolyte solution and the deposited lithium metal, and as a result, the formation of a SEI film can be suppressed.

The metal layer may contain at least one selected from the group consisting of indium and tin. Indium and tin suppress the formation of a SEI film due to indium and tin being alloyed with lithium metal.

The negative electrode current collector may include a copper foil, or may be a copper foil. The oxygen content of the copper foil may be 50 ppm or less (by mass). Note that an oxygen content refers to the oxygen content of the copper foil excluding an oxide film covering a surface of the copper foil. By setting the oxygen content of the copper foil to 50 ppm or less, the oxide film on the surface of the copper foil is reduced, which facilitates the formation of a layer of the alloy (A) containing gallium and copper and makes it possible to obtain effects such as facilitating battery production. Furthermore, by setting the oxygen content of the copper foil to 50 ppm or less, embrittlement of the copper foil can be suppressed, and cycle characteristics can be particularly improved. The oxygen content of the copper foil may be 30 ppm or less, 15 ppm or less, or 10 ppm or less.

The oxygen content in the negative electrode current collector can be determined using the following method.

First, a sample of the negative electrode current collector is produced. The negative electrode current collector used in a process for producing a battery may be used as the sample. Alternatively, the negative electrode current collector taken out by disassembling a battery may also be used as the sample. Then, the sample is washed with nitric acid for 10 seconds to remove an oxide film on a sample surface. The above washing is repeated until the mass of the sample is reduced by 10% or more. Then, the sample is washed with distilled water, washed with alcohol, and washed with acetone in the stated order. Thereafter, the sample is dried with warm air and then immediately analyzed using an inert gas fusion-infrared absorption method to determine the oxygen content in the sample. An oxygen and nitrogen simultaneous analyzer (TC-336 manufactured by LECO) can be used as an analyzer.

Constituent elements of the lithium secondary battery (B) are not particularly limited, except for the use of the above-mentioned negative electrode. Constituent elements used in known lithium secondary batteries may be used as constituent elements other than the negative electrode. Examples of constituent elements of the lithium secondary battery (B) will be described below. However, constituent elements of the lithium secondary battery (B) are not limited to examples described below.

(Negative Electrode)

As described above, the negative electrode includes a negative electrode current collector. On the negative electrode, a metal layer containing lithium is deposited during charging. A metal (lithium or the like) that constitutes the metal layer dissolves in a nonaqueous electrolyte during discharging. The metal layer is deposited on, of surfaces of the negative electrode, a surface facing a positive electrode mixture layer with a separator interposed therebetween. When both surfaces of the negative electrode face the positive electrode mixture layer with the separator interposed therebetween, the metal layers are formed on both surfaces of the negative electrode current collector.

A method for measuring the area density $D_m$ when the metal element M is gallium will be described below. Note that, even when the metal element M is an element other than gallium, the area density can be measured using a similar method. First, the negative electrode is taken out from the lithium secondary battery with a State Of Charge (SOC) of 90% to 100%. The lithium secondary battery may be an initial battery before charging/discharging is repeated. Then, a lithium salt adhering to the surface of the negative electrode is removed by immersing the negative electrode taken out in 1,2-dimethoxyethane. The negative electrode taken out from 1,2-dimethoxyethane is dried. Then, a negative electrode sample is produced by cutting out a region where the metal layer is deposited, and an area S of the region where the metal layer is deposited is measured. When the metal layers are deposited on both surfaces of the negative electrode, the area S is the sum of the areas of both surfaces. Thereafter, the dried negative electrode sample is immersed in pure water to completely dissolve the lithium alloy contained in the negative electrode sample, thereby obtaining an aqueous solution. The concentration of gallium ions in the aqueous solution is measured using Inductively Coupled Plasma Atomic Emission Spectroscopy (ICP-AES). A mass W of gallium present in the negative electrode sample is calculated from the measured concentration of gallium ions. The area density $D_m$ is determined by dividing the mass W by the area S.

A lithium alloy layer and the metal layer may contain an element X other than the above elements (lithium, copper, gallium, indium, and tin). Examples of the element X include magnesium, aluminum, calcium, lead, hydrogen, sodium, bismuth, and zinc. The lithium alloy layer and the metal layer may contain one type of element X, or may contain two or more types of element X. The content of the element X in the lithium alloy layer and the metal layer is lower than the content of the metal element M (e.g., gallium).

In a battery, such as a lithium secondary battery, in which lithium metal is deposited on the negative electrode when the battery is charged, the open circuit potential (OCV: Open Circuit Voltage) of the negative electrode in a fully-charged state may be 70 mV or less with respect to lithium metal (lithium dissolution/deposition potential), for example. The OCV of the negative electrode fully charged may be measured by, under an argon atmosphere, disassembling a fully charged battery, removing the negative electrode, and assembling a cell with lithium metal as a counter electrode. The nonaqueous electrolyte of the cell may have the same composition as the nonaqueous electrolyte in the disassembled battery.

(Negative Electrode Current Collector)

A conductive sheet containing copper is used for the negative electrode current collector. The negative electrode current collector may include a copper foil or copper alloy foil, or may be a copper foil or copper alloy foil. Examples of elements other than copper contained in copper alloys include zinc, nickel, tin, iron, manganese, and lead. The thickness of the negative electrode current collector may be in a range of 5 μm to 300 μm (e.g., in a range of 10 μm to 100 μm).

(Nonaqueous Electrolyte)

A nonaqueous electrolyte (nonaqueous electrolyte solution) contains a solvent (nonaqueous solvent) and a solute dissolved in the solvent. Examples of solutes include lithium salts. Various additives may be added to an electrolyte solution.

A known material can be used as a solvent. As the solvent, for example, a cyclic carbonic acid ester, a chain carbonic acid ester, a cyclic carboxylic acid ester, a chain carboxylic acid ester, a chain ether, a fluorinated chain ether, a cyclic ether, a fluorinated cyclic ether, or the like can be used. Examples of the cyclic carbonic acid ester include propylene carbonate (PC), ethylene carbonate (EC), fluoroethylene carbonate (FEC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL) and $\gamma$-valerolactone (GVL). Examples of the chain carboxylic acid ester include nonaqueous solvents such as methyl acetate, ethyl acetate, propyl acetate, methyl propionate (MP), and ethyl propionate (EP). Examples of the chain ether include dimethyl ether, ethyl methyl ether, diethyl ether, ethyl propyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,1-dimethoxymethane, and 1,1-diethoxyethane. The chain ether preferably includes at least a chain ether having two or more ether bonds. Examples of such a chain ether include 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol ethyl methyl ether, tetraethylene glycol dimethyl ether, tetraethylene glycol diethyl ether, and tetraethylene glycol ethyl methyl ether. Examples of the cyclic ether include 1,3-dioxolane, 4-methy-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether. The fluorinated chain ether has a structure in which one or more hydrogen atoms of the above chain ether are substituted by fluorine atoms, and examples thereof include bis(2,2,2-trifluoroethyl)ether, 1, 1,2,2-tetrafluoroethyl 2,2,2-trifluoroethyl ether, and 1,1,2,2-tetrafluoroethyl 2,2,3,3-tetrafluoropropyl ether. The fluorinated cyclic ether has a structure in which one or more hydrogen atoms of the above cyclic ether are substituted by fluorine atoms, and an example thereof is 3,3,4,4-tetrafluorotetrahydrofuran. The nonaqueous solvents may be used alone or in combination of two or more.

Examples of lithium salts include lithium salts of chlorine-containing acids (such as $LiClO_4$, $LiAlCl_4$, and $LiB_{10}Cl_{10}$), lithium salts of fluorine-containing acids (such as $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (such as $LiN(FSO_2)_2$, $LiN(CF_3SO_2)_2$, $LiN(CF_3SO_2)(FSO_2)$, $LiN(CF_3SO_2)(C_4F_9SO_2)$, and $LiN(C_2F_5SO_2)_2$), lithium halides (such as LiCl, LiBr, and LiI), and lithium salts containing oxalate complexes (such as $LiB(C_2O_4)_2$, $LiBF_2(C_2O_4)$, $LiPF_4(C_2O_4)$, and $LiPF_2(C_2O_4)_2$). These lithium salts may be used alone or in combination of two or more.

The concentration of a lithium salt in the electrolyte solution may be 1 mol/L or more and 2 mol/L or less, or 1 mol/L or more and 1.5 mol/L or less. An electrolyte solution having high ionic conductivity and appropriate viscosity can be obtained by setting the lithium salt concentration within the above range.

The electrolyte solution may contain an additive (e.g., a known additive). Examples of additives include 1,3-propanesultone, methyl benzene sulfonate, cyclohexylbenzene, biphenyl, diphenyl ether, and fluorobenzene.

(Positive Electrode)

The positive electrode includes, for example, a positive electrode current collector and a positive electrode mixture layer formed on a surface of the positive electrode current collector. The positive electrode current collector may be in the form of a sheet (e.g., a foil or a film) or may be porous. The positive electrode mixture layer may be formed on both main surfaces of the positive electrode current collector, or may be formed on only one main surface. The positive electrode mixture layer may be formed in a state in which a mesh-like positive electrode current collector is filled with the positive electrode mixture layer.

Examples of a material of the positive electrode current collector include metallic materials such as Al, Al alloys, Ti, Ti alloys, and Fe alloys. An Fe alloy may be stainless steel.

The positive electrode mixture layer contains a positive electrode active material. The positive electrode mixture layer may contain, in addition to the positive electrode active material, at least one type selected from the group consisting of a binding material, a conductive material, a thickener, and an additive. A conductive carbonaceous material may be disposed between the positive electrode current collector and the positive electrode mixture layer, as needed.

A material that electrochemically absorbs and releases lithium ions is used as a positive electrode active material. It is possible to use, as such a material, for example, at least one selected from the group consisting of lithium-containing transition metal oxides, transition metal fluorides, polyanions, fluorinated polyanions, and transition metal sulfides. From the viewpoint of a high average discharge voltage and cost advantage, the positive electrode active material may be a lithium-containing transition metal oxide.

Examples of transition metal elements contained in the lithium-containing transition metal oxide include Sc, Ti, V, Cr, Mn, Fe, Co, Ni, Cu, Y, Zr, and W. The lithium-containing transition metal oxide may contain only one type of transition metal element, or may contain two or more types of transition metal elements. The transition metal element may be at least one selected from the group consisting of Co, Ni, and Mn. The lithium-containing transition metal oxide can contain one, or two or more typical metal elements as needed. Examples of the typical metal elements include Mg, Al, Ca, Zn, Ga, Ge, Sn, Sb, Pb, and Bi. The typical metal element may be Al or the like.

Examples of the binding material include fluoropolymers, polyacrylonitrile, polyimide resins, acrylic resins, polyolefin resins, and rubber polymers. Examples of fluoropolymers include polytetrafluoroethylene and polyvinylidene fluoride.

It is possible to use, as a conductive material, a conductive carbonaceous material or the like. Examples of conductive carbonaceous materials include carbon black, carbon nanotubes, and graphite. Examples of the carbon black include acetylene black and Ketj enblack.

It is possible to use, as a thickener, a cellulose derivative such as cellulose ether, for example. Examples of cellulose derivatives include carboxymethyl cellulose (CMC) and modified products thereof, and methyl cellulose. Examples of modified products of CMC also include salts of CMC. Examples of salts include alkali metal salts (e.g., sodium salts) and ammonium salts.

It is possible to use, as a carbonaceous material disposed between the positive electrode current collector and the positive electrode mixture layer, for example, at least one type selected from conductive carbonaceous materials mentioned as examples of the conductive material.

The positive electrode can be obtained, for example, by applying a slurry containing constituent components of the positive electrode mixture layer and a dispersion medium to the positive electrode current collector or filling the positive electrode current collector with the slurry, and drying and compressing the resulting coating film. A conductive carbonaceous material may be applied to a surface of the positive electrode current collector as needed. It is possible to use, as a dispersion medium, at least one selected from the group consisting of water and organic media (such as N-methyl-2-pyrrolidone).

(Separator)

A porous sheet having ion permeability and insulating properties can be used for the separator. Examples of the form of the porous sheet include a microporous film, a woven fabric, and a nonwoven fabric. A material of the separator may be a polymer material. Examples of the polymer materials include olefin resins, polyamide resins, and cellulose. Examples of the olefin resins include polyethylene, polypropylene, and copolymers of ethylene and propylene. The separator may contain an additive as needed. Examples of the additive include inorganic fillers.

The separator may include a plurality of layers that differ from each other in at least either one of forms and compositions. Such a separator may be, for example, a stacked body of a microporous polyethylene film and a microporous polypropylene film, or a stacked body of a nonwoven fabric containing cellulose fibers and a nonwoven fabric containing thermoplastic resin fibers.

(Shapes etc.)

The positive electrode, the negative electrode, and the separator constitute an electrode group. Examples of the electrode group include an electrode group (rolled-up type electrode group) obtained by rolling up the positive electrode and the negative electrode with the separator interposed between the positive electrode and the negative electrode. The electrode group may be in a form other than a rolled-up type. For example, the electrode group may be an electrode group (stacked type electrode group) obtained by stacking the positive electrode and the negative electrode on each other with the separator interposed between the positive electrode and the negative electrode. The form of the lithium secondary battery is not limited, and may be a cylinder, rectangle, coin, button, laminate, or the like. The lithium secondary battery (B) includes an exterior body corresponding to these forms. The exterior body accommodates the electrode group and a nonaqueous electrolyte. There is no particular limitation on the exterior body, and an exterior body similar to an exterior body of a known lithium secondary battery may also be used.

(One Example of Method for Manufacturing Lithium Secondary Battery (B))

A manufacturing method (M) will be described below as an example of a method for manufacturing the lithium secondary battery (B). However, the lithium secondary battery (B) may be manufactured using a manufacturing method other than the manufacturing method (M) described below. The items described regarding the lithium secondary battery (B) can also be applied to the manufacturing method (M) below, and therefore, redundant descriptions thereof may be omitted. Items described regarding the manufacturing method (M) may also be applied to the lithium secondary battery (B).

A manufacturing method (M) includes a step (i) of forming a negative electrode substrate and a step (ii) of assembling a battery using the negative electrode substrate. These will be described below. Hereinafter, a case where the metal element M is gallium will be described. Even when the metal element M is a metal element other than gallium, a lithium secondary battery (B) can be manufactured using a method similar to the following method. In such a case, it is sufficient that "gallium" is replaced with "metal element M" in the following description.

In the step (i), a negative electrode substrate that includes the negative electrode current collector and a gallium-containing layer disposed on the surface of the negative electrode current collector is formed. The negative electrode substrate can be formed by applying gallium or an alloy containing gallium (alloy (a)) to the surface of the negative electrode current collector. The gallium-containing layer may be a layer of gallium alone, a layer of the alloy (a), or a layer of the alloy (A) containing gallium and copper.

Liquid gallium or a liquid alloy (a) is applied to the surface of the negative electrode current collector. Therefore, the melting point of the alloy (a) is preferably 50°C or less. Since gallium and an alloy containing gallium have low melting points, a negative electrode substrate can be easily formed.

There is no particular limitation on a method for applying the above metal (gallium, alloys containing gallium, and the like) to the negative electrode substrate. For example, the above metal may be applied using a brush or sprayed. Since a small amount of metal is applied, even when the metal has a low melting point, the negative electrode substrate can be used as is in assembling the battery. Note that the step (i) may be performed at a temperature higher than the melting point of the metal, and subsequent steps may be performed at a temperature lower than the melting point of the metal. Note that gallium or the alloy (a) may be disposed on the surface of the negative electrode current collector using a method other than the application method.

Of the two main surfaces of the negative electrode substrate, the above metal is applied to the main surface facing the positive electrode mixture layer with the separator interposed therebetween. The amount of the metal applied is an amount at which the area density $D_m$ is achieved. Since the amount of the metal applied and the amount at which the area density $D_m$ is achieved by the applied metal are approximately the same, it is sufficient to apply the metal in an amount approximately equal to the amount in the range mentioned as an example of the area density $D_m$.

In the step (ii), a battery is assembled using the negative electrode substrate formed in the step (i). There is no limitation on the method for assembling the battery, and the battery can be assembled using a method similar to a known method for assembling a lithium secondary battery. When the lithium secondary battery (B) includes a rolled-up type electrode group, the rolled-up type electrode group is produced by first rolling up the positive electrode, the negative electrode, and the separator such that the separator is disposed between the positive electrode and the negative electrode. Then, the electrode group and a nonaqueous electrolyte are accommodated in an exterior body. The battery is assembled in this manner. The lithium secondary battery (B) is manufactured in this manner. Commercially available products may be used as constituent elements other than the negative electrode, or constituent elements other than the negative electrode may be produced using known methods.

The lithium secondary battery (B) can be obtained in the above manner. When charging is performed after the above steps, a metal layer (at least lithium metal) is deposited on the negative electrode substrate, and when discharging is performed, the deposited metal layer (at least lithium metal) dissolves in the nonaqueous electrolyte.

Hereinafter, an example of the lithium secondary battery (B) will be specifically described with reference to the drawings. However, the lithium secondary battery (B) is not limited to having a configuration shown in the drawings. The examples described below can be modified based on the above descriptions. Also, items described below may be applied to the above embodiments.

(Embodiment 1)

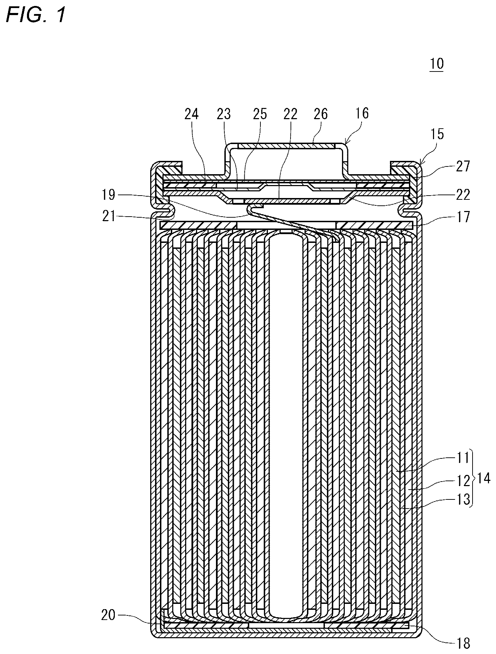

FIG. 1 is a longitudinal cross-sectional view schematically showing a lithium secondary battery 10 according to Embodiment 1. The lithium secondary battery 10 is a cylindrical battery. The lithium secondary battery 10 includes a cylindrical battery case, and a rolled-up electrode group 14 and a nonaqueous electrolyte (not shown) that are accommodated in the battery case. The battery case includes a cylindrical case body 15 having a bottom, and a sealing body 16 that seals an opening of the case body 15. The case body 15 is made of metal. A gasket 27 is disposed between the case body 15 and the sealing body 16. The gasket 27 ensures the airtightness of the battery case. The case body 15, the sealing body 16, and the gasket 27 constitute an exterior body. In the case body 15, insulating plates 17 and 18 are disposed on both end portions in a rolling-up axial direction of the electrode group 14.

The case body 15 has a step portion 21. The sealing body 16 is supported by the step portion 21. The sealing body 16 includes a filter 22, a lower valve 23, an insulating member 24, an upper valve 25, and a cap 26. The above-described components that constitute the sealing body 16 are electrically connected to each other, except for the insulating member 24. The cap 26 functions as a positive electrode terminal. The case body 15 functions as a negative electrode terminal.

The electrode group 14 is a rolled-up type electrode group constituted by a positive electrode 11, a negative electrode 12, and separators 13. The positive electrode 11, the negative electrode 12, and the separators 13 are all band-shaped. The negative electrode 12 is the above-described negative electrode.

The positive electrode 11 is electrically connected to the cap 26 via a positive electrode lead 19. One end of the positive electrode lead 19 is connected to the positive electrode 11. The other end of the positive electrode lead 19 is connected to the sealing body 16 (filter 22). The negative electrode 12 is electrically connected to the case body 15 via a negative electrode lead 20. One end of the negative electrode lead 20 is connected to the negative electrode 12. The other end of the negative electrode lead 20 is connected to the case body 15.

(Appendix)

The above description discloses the following techniques.

(Technique 1)

A lithium secondary battery including:

a positive electrode;
a negative electrode;
a separator disposed between the positive electrode and the negative electrode; and
a nonaqueous electrolyte,
wherein the negative electrode is a negative electrode in which a metal layer containing lithium is deposited during charging, and the metal layer dissolves during discharging,
the negative electrode includes a current collector containing copper,
the negative electrode contains at least one metal element M selected from the group consisting of metal elements having a melting point of 50°C or lower as a simple substance and a metal element having the lowest melting point among metal elements that constitute an alloy having a melting point of 50°C or lower, and
the negative electrode contains the metal element M at an area density in a range of 0.001 mg/cm$^2$ to 0.75 mg/cm$^2$ in a region where the metal layer is deposited during charging.

(Technique 2)

The lithium secondary battery according to Technique 1,
wherein the metal element is gallium.

(Technique 3)

The lithium secondary battery according to Technique 2,
wherein gallium metal and/or an alloy containing gallium and copper is present on a surface of the current collector.

(Technique 4)

The lithium secondary battery according to Technique 3,
wherein the alloy contains at least one selected from the group consisting of indium and tin.

(Technique 5)

The lithium secondary battery according to any one of Techniques 2 to 4,
wherein the metal layer contains a gallium-lithium alloy.

(Technique 6)

The lithium secondary battery according to any one of Techniques 1 to 5,
wherein the metal layer contains at least one selected from the group consisting of indium and tin.

(Technique 7)

The lithium secondary battery according to any one of Techniques 1 to 6,

wherein the current collector includes a copper foil, and
an oxygen content of the copper foil is 50 ppm or less.

Examples

Hereinafter, the present disclosure will be described in more detail using examples. In these examples, a plurality of lithium secondary batteries were produced and evaluated using the following procedures.

(Production of Battery A1)

(1) Production of Positive Electrode

A positive electrode active material, acetylene black (conductive material), and polyvinylidene fluoride (binding material) were mixed in a mass ratio of 95 : 2.5 : 2.5 to obtain a mixture. A positive electrode slurry was prepared by adding an appropriate amount of N-methyl-2-pyrrolidone (dispersion medium) to the mixture and stirring the resulting mixture. A lithium-containing transition metal oxide containing Ni, Co, and Al was used as the positive electrode active material.
A stacked body was formed by applying the positive electrode slurry to both surfaces of an aluminum foil (positive electrode current collector) and drying the positive electrode slurry. The stacked body was compressed in the thickness direction using a roller. The compressed stacked body was cut to a predetermined size. A positive electrode including the positive electrode current collector and positive electrode mixture layers formed on both surfaces of the positive electrode current collector was produced in this manner.

(2) Production of Negative Electrode Substrate

Gallium was applied to the surface of a negative electrode current collector. Gallium was applied thereto at a temperature at which gallium melts. The amount of gallium applied was set such that the area density Dm takes a value shown in Table 1. A copper foil (with a thickness of 8 $\mu$m) was used as the negative electrode current collector.

(3) Preparation of Nonaqueous Electrolyte

A liquid nonaqueous electrolyte was prepared by dissolving $LiPF_6$ and $LiBF_2(C_2O_4)$ in a nonaqueous solvent. The concentrations of $LiPF_6$ and $LiBF_2(C_2O_4)$ in the nonaqueous electrolyte were respectively 1 mol/L and 0.1 mol/L. A mixture of propylene carbonate (PC) and 1,2-dimethoxyethane (DME) in a volume ratio of 1 : 2 was used as the nonaqueous solvent.

(4) Assembly of Battery

One end of an aluminum positive electrode lead was attached to the positive electrode current collector through welding. One end of a nickel negative electrode lead was attached to the negative electrode current collector through welding. A rolled-up type electrode group was produced by spirally rolling up the positive electrode and the negative electrode with a separator interposed between the positive electrode and the negative electrode, in an inert gas atmosphere. A microporous polyethylene film was used as the separator.
Next, the electrode group was accommodated in an exterior body. A bag-shaped exterior body formed of a laminate having an Al layer was used as the exterior body. The nonaqueous electrolyte was injected into the exterior body, and the exterior body was then sealed. A battery A1 (lithium secondary battery) was produced in this manner. Note that, when the electrode group was accommodated in the exterior body, the other end of the positive electrode lead and the other end of the negative electrode lead were exposed to the outside of the exterior body.

(Batteries A2 and A3)

Batteries A2 and A3 were produced under the same conditions and using the same method as those for the production of the battery A1, except that the amount of gallium applied to the negative electrode current collector was changed such that the area density Dm takes a value shown in Table 1.

(Battery A4)

A negative electrode substrate was produced by applying a gallium-indium-tin alloy melt to the negative electrode current collector, instead of applying gallium. The composition of the alloy was set to gallium : indium : tin = 62 : 22 : 16. At this time, the amount of the alloy melt applied was set such that the area density Dm (the area density of gallium) was 0.5 mg/cm$^2$. A battery A4 was produced under the same conditions and using the same method as those for the production of the battery A1, except that the obtained negative electrode substrate was used.

(Battery C1)

A battery C1 was produced under the same conditions and using the same method as those for the production of the battery A1, except that no gallium was applied to the negative electrode current collector.

(Battery C2)

A battery C2 was produced under the same conditions and using the same method as those for the production of the battery A1, except that the amount of gallium applied to the negative electrode current collector was changed such that the area density Dm takes a value shown in Table 1.

(5) Evaluation

A charge/discharge cycle test was conducted on the produced lithium secondary batteries. Specifically, each of the lithium secondary batteries was charged in a thermostatic bath at 25°C under the following charging conditions, charging was stopped for 20 minutes (resting), and the battery was discharged under the following discharging conditions. A 50-charge/discharge cycle test was performed by repeating one cycle including the above charging, resting, and discharging 50 times.

(Charge)

The battery was charged at a constant current of 1 mA per unit area (unit: square centimeter) of an electrode until the battery voltage reached 4.3 V, and then charged at a constant voltage of 4.3 V until the current value per unit area (unit: square centimeter) of the electrode reached 0.1 mA.

(Discharge)

The battery was discharged at a constant current of 1 mA per unit area (unit: square centimeter) of the electrode until the battery voltage reached 3.0 V.

A capacity retention rate of each battery after the above cycle test was calculated. The capacity retention rate (50-cycle capacity retention rate) was determined using the following equation by measuring a battery capacity E1 after one cycle and a battery capacity E50 after 50 cycles. A higher capacity retention rate indicates higher battery performance.

$$\text{The capacity retention rate } (\%) = 100 \times E50/E1$$

Table 1 shows the results of evaluating the area density Dm and the capacity retention rate of each battery. Note that the area density Dm indicates an amount of gallium contained per unit area of a region where the metal layer is deposited on the negative electrode of a battery with a SOC of 90%.

[Table 1]

| Batteries | Area Density Dm (mg/cm$^2$) | Relative Values of 50-cycle Capacity Retention Rates (%) |
|---|---|---|
| C1 | 0 | 100.0 |
| A1 | 0.025 | 101.0 |
| A2 | 0.05 | 101.9 |
| A3 | 0.5 | 102.2 |
| A4 | 0.5 | 102.5 |
| C2 | 1.0 | 92.8 |

The batteries A1 to A3 are lithium secondary batteries (B) according to the present disclosure, and the batteries C1 and C2 are comparative examples. Relative values of the capacity retention rates in Table 1 are relative values when the 50-cycle capacity retention rate of the battery C1 is set to 100%.

As shown in Table 1, the capacity retention rate could be increased by setting the area density Dm to a range of 0.001 mg/cm$^2$ to 0.75 mg/cm$^2$ (e.g., a range of 0.025 mg/cm$^2$ to 0.5 mg/cm$^2$).

**EP 4 629 320 A1**

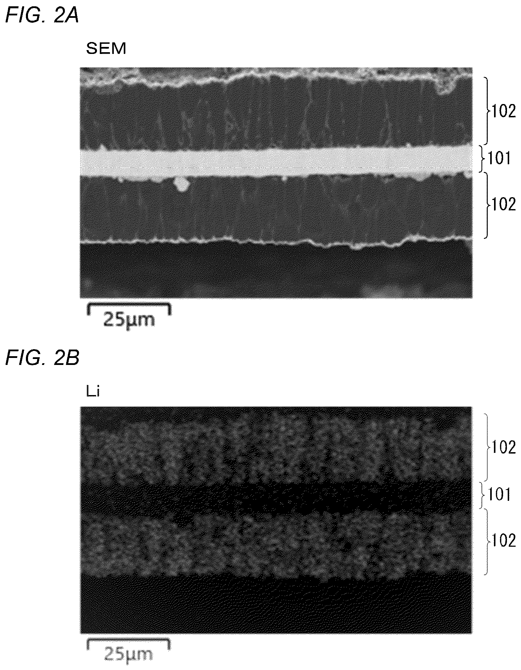

The battery A2 was charged once as shown in the above cycle test. Then, the negative electrode was taken out from the charged battery A2, and a cross section of a portion where the metal layer was deposited was analyzed through SEM-EDX (scanning electron microscope-energy dispersive X-ray analysis). Specifically, an image showing a distribution of lithium, an image showing a distribution of gallium, and an image showing a distribution of copper were obtained through SEM-EDX. The obtained images are shown in FIGS. 2A to 2D. FIGS. 2A to 2D are images of the same portion.

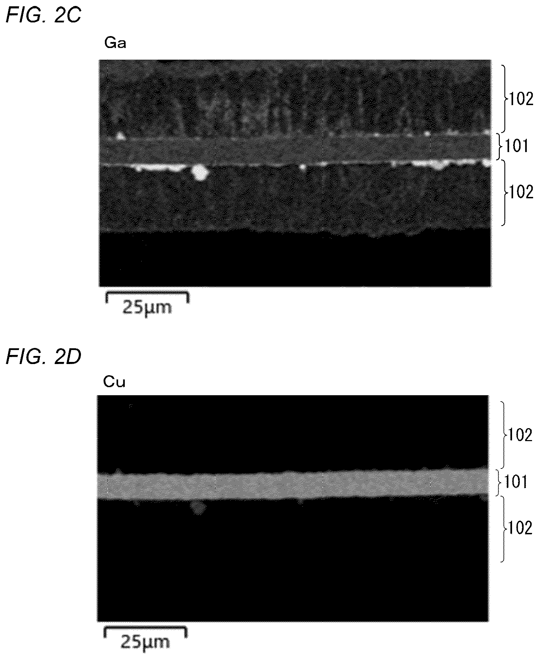

FIG. 2A shows a SEM image. FIG. 2B shows a distribution of lithium. FIG. 2C shows a distribution of gallium. FIG. 2D shows a distribution of copper. As shown in FIGS. 2A to 2D, a part of gallium was aggregated on the surface of the negative electrode current collector (copper foil) 101, and the other part of gallium diffused into the metal layer 102. The metal layer 102 was the metal layer mainly made of lithium. It is conceivable that at least part of gallium that was present on the surface of the negative electrode current collector 101 formed an alloy with copper. Part of gallium that diffused into the metal layer 102 diffused onto the surfaces of lithium lumps or between lithium lumps. It is conceivable that at least part of gallium formed an alloy with lithium.

The produced battery A4 was subjected to 100 charge/discharge cycles in the above-mentioned charge/-discharge cycle test. The negative electrode was taken out from the battery A4 after the charge/discharge cycles, and a cross section of a portion where the metal layer was deposited was analyzed through SEM-EDX. As a result, it was found that a part of gallium was aggregated on the surface of the copper foil (negative electrode current collector), and the other part of gallium diffused into the metal layer (mainly lithium) deposited on the negative electrode current collector. Parts of indium and tin were also distributed in a manner similar to that for gallium. It is conceivable that parts of gallium, indium, and tin formed alloys with copper on the surface of the copper foil.

[Industrial Applicability]

The present disclosure can be used for a lithium secondary battery.

Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

[Reference Signs List]

10: lithium secondary battery, 11: positive electrode, 12: negative electrode, 13: separator, 14: electrode group, 15: case body, 16: sealing body, 27: gasket, 101: negative electrode current collector, 102: metal layer

**Claims**

1. A lithium secondary battery comprising:

   a positive electrode;
   a negative electrode;
   a separator disposed between the positive electrode and the negative electrode; and
   a nonaqueous electrolyte,
   wherein the negative electrode is a negative electrode in which a metal layer containing lithium is deposited during charging, and the metal layer dissolves during discharging,
   the negative electrode includes a current collector containing copper,
   the negative electrode contains at least one metal element M selected from the group consisting of metal elements having a melting point of 50°C or lower as a simple substance and a metal element having the lowest melting point among metal elements that constitute an alloy having a melting point of 50°C or lower, and
   the negative electrode contains the metal element M at an area density in a range of 0.001 mg/cm$^2$ to 0.75 mg/cm$^2$ in a region where the metal layer is deposited during charging.

2. The lithium secondary battery according to claim 1,
   wherein the metal element M is gallium.

3. The lithium secondary battery according to claim 2,
   wherein gallium metal and/or an alloy containing gallium and copper is present on a surface of the current collector.

**4.** The lithium secondary battery according to claim 3,
wherein the alloy contains at least one selected from the group consisting of indium and tin.

**5.** The lithium secondary battery according to claim 2,
wherein the metal layer contains a gallium-lithium alloy.

**6.** The lithium secondary battery according to claim 1 or 2,
wherein the metal layer contains at least one selected from the group consisting of indium and tin.

**7.** The lithium secondary battery according to claim 1 or 2,

wherein the current collector includes a copper foil, and
an oxygen content of the copper foil is 50 ppm or less.

FIG. 1

FIG. 2A

SEM

25μm

FIG. 2B

Li

25μm

FIG. 2C

Ga

102

101

102

25μm

FIG. 2D

Cu

102

101

102

25μm

## INTERNATIONAL SEARCH REPORT

| International application No. |
|---|
| **PCT/JP2023/040416** |

**A.    CLASSIFICATION OF SUBJECT MATTER**

*H01M 4/134*(2010.01)i; *H01M 4/40*(2006.01)i; *H01M 4/66*(2006.01)i; *H01M 10/052*(2010.01)i
FI:    H01M4/134; H01M4/40; H01M4/66 A; H01M10/052

According to International Patent Classification (IPC) or to both national classification and IPC

**B.    FIELDS SEARCHED**

Minimum documentation searched (classification system followed by classification symbols)

H01M4/134; H01M4/40; H01M4/66; H01M10/052

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 110752375 A (SHANDONG UNIVERSITY) 04 February 2020 (2020-02-04)<br>     paragraphs [0032]-[0106] | 1-6 |
| Y | | 7 |
| X | JP 8-329929 A (MATSUSHITA BATTERY INDUSTRIAL CO., LTD.) 13 December 1996<br>(1996-12-13)<br>     claims, paragraphs [0009], [0010], fig. 3 | 1-5 |
| Y | | 7 |
| A | | 6 |
| X | JP 9-204912 A (MATSUSHITA BATTERY INDUSTRIAL CO., LTD.) 05 August 1997<br>(1997-08-05)<br>     claims, paragraph [0009] | 1-5 |
| Y | | 7 |
| A | | 6 |
| Y | JP 2000-182623 A (NIPPON DENKAI, LTD.) 30 June 2000 (2000-06-30)<br>     claims | 7 |

☑ Further documents are listed in the continuation of Box C.         ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/040416** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2000-303128 A (HITACHI CABLE LTD.) 31 October 2000 (2000-10-31) claims | 7 |
| A | JP 2015-18799 A (SEMICONDUCTOR ENERGY LABORATORY CO., LTD.) 29 January 2015 (2015-01-29) | 1-7 |
| A | CN 111755699 A (SHANDONG UNIVERSITY) 09 October 2020 (2020-10-09) | 1-7 |

Form PCT/ISA/210 (second sheet) (January 2015)

**INTERNATIONAL SEARCH REPORT**
Information on patent family members

International application No.

**PCT/JP2023/040416**

| Patent document cited in search report | | | Publication date (day/month/year) | Patent family member(s) | Publication date (day/month/year) |
|---|---|---|---|---|---|
| CN | 110752375 | A | 04 February 2020 | (Family: none) | |
| JP | 8-329929 | A | 13 December 1996 | (Family: none) | |
| JP | 9-204912 | A | 05 August 1997 | (Family: none) | |
| JP | 2000-182623 | A | 30 June 2000 | (Family: none) | |
| JP | 2000-303128 | A | 31 October 2000 | (Family: none) | |
| JP | 2015-18799 | A | 29 January 2015 | US 2014/0370379 A1 | |
| CN | 111755699 | A | 09 October 2020 | (Family: none) | |

Form PCT/ISA/210 (patent family annex) (January 2015)

**EP 4 629 320 A1**

**Patent documents cited in the description**

- JP 2015512129 A
- JP 2007214127 A
- JP 2015520926 A